(19) **Europäisches Patentamt**

**European Patent Office**

**Office européen des brevets**

(11) **EP 1 331 621 B1**

(12) **FASCICULE DE BREVET EUROPEEN**

| | |
|---|---|
| (45) Date de publication et mention de la délivrance du brevet: **15.02.2006 Bulletin 2006/07** | (51) Int Cl.: **G08G 1/16** *(2006.01)* **G01S 13/93** *(2006.01)* |

(21) Numéro de dépôt: **03290170.4**

(22) Date de dépôt: **23.01.2003**

(54) **Procédé de supervision de l'environnement d'un véhicule**

Verfahren zum Überwachen des Umfeldes eines Fahrzeugs

Method for monitoring the environment of a vehicle

| | |
|---|---|
| (84) Etats contractants désignés: **AT BE BG CH CY CZ DE DK EE ES FI FR GB GR HU IE IT LI LU MC NL PT SE SI SK TR** | (72) Inventeur: **Baraud, Pierre** **92190 Meudon (FR)** |
| (30) Priorité: **24.01.2002 FR 0200870** | (74) Mandataire: **Hirsch & Associés** **58, avenue Marceau** **75008 Paris (FR)** |
| (43) Date de publication de la demande: **30.07.2003 Bulletin 2003/31** | (56) Documents cités: **EP-A- 0 726 473** **US-A- 5 314 037** **US-A- 5 613 039** |
| (73) Titulaire: **Peugeot Citroen Automobiles SA** **92200 Neuilly sur Seine (FR)** | |

**Description**

La présente invention concerne les véhicules automobiles, et plus spécifiquement la supervision de l'environnement de tels véhicules, pour déterminer le caractère dangereux d'un obstacle potentiel. En fonction des résultats obtenus, il est possible de déclencher des équipements de sécurité, comme des coussins gonflables ou un freinage automatique, ou d'avertir le conducteur du véhicule.

US-A-5 314 037 décrit un système d'évitement de collision pour véhicule; le véhicule est muni d'un ou plusieurs radars à lasers, qui permettent de détecter la position, la direction du mouvement, la vitesse et la taille d'obstacles. Il est aussi prévu d'utiliser un capteur d'angle de direction ou un gyroscope pour fournir des informations quant aux variations de direction du véhicule équipé du système. Le système calcule un instant de collision estimé, par le rapport entre la distance du véhicule à l'obstacle et la vitesse relative du véhicule à l'obstacle. Cet instant estimé est comparé à un temps minimal admissible, dont le calcul fait intervenir une fonction à variables multiples. La nature de cette fonction n'est pas précisée. En fonction de la nature de la comparaison, différentes alarmes sont mises en oeuvre.

US-A-6 085 151 décrit un système capteur de collision prédictif. Ce document propose des méthodes d'analyse des obstacles et de leur comportement. Les cibles sont identifiées dans le système de détection par analyse de nuées ("cluster analysis" en langue anglaise) et sont suivies par filtrage de Kalman dans un repère cartésien. On calcule, pour les pistes obtenues en sortie du filtre de Kalman, des prédictions pour différents temps, correspondant aux durées de déploiement des différents équipements de sécurité du véhicule. La menace que représente chaque piste est évaluée à partir du point le plus proche de la trajectoire. Une probabilité de menace est affectée à chaque objet en fonction de la précision de la piste, de son état et de la qualité de la piste. Ces différents paramètres prennent en compte l'incertitude associée au filtrage de Kalman à la méthode prédictive utilisée, mais ne sont pas représentatifs des erreurs engendrées par le système de détection.

EP-A-0 726 473 décrit un radar de véhicule destiné à exclure un véhicule changeant de voie des cibles à suivre. Ce radar de véhicule exclut un véhicule situé devant d'être une cible à suivre lorsque le véhicule se déplace vers une autre voie, en réduisant la certitude du véhicule comme cible. Le radar de véhicule calcule une distance relative et une vitesse relative entre chacun des objets cibles et un véhicule sur lequel le radar de véhicule est fourni, par transmission vers l'avant d'une onde porteuse modulée en fréquence et réception de l'onde porteuse réfléchie par chacun des objets cibles. Un niveau de certitude, représenté par la probabilité d'existence d'objets cibles, est calculé sur la base d'une relation entre une condition détectée actuelle des objets cibles et une condition détectée précédente des objets cibles. Le niveau de certitude des objets cibles est modifié lorsqu'il est déterminé que les objets cibles s'ont sortis d'une voie dans laquelle le véhicule se déplace, de telle sorte que les objets cibles sont exclus des cibles à suivre.

Il existe donc un besoin d'un système fiable, simple et peu coûteux, qui permette de traiter les résultats fournis par un système de supervision de l'environnement d'un véhicule.

L'invention est définie dans les revendications indépendantes 1 et 9.

En conséquence, l'invention propose, dans un mode de réalisation, un procédé de traitement des résultats fournis par un système de supervision de l'environnement d'un véhicule qui comprend le calcul, pour un point dont la position est mesurée par le système de supervision de l'environnement, d'un ensemble de positions possibles du point à un instant futur, le calcul prenant en compte l'incertitude de la mesure de la position du point par le système de supervision.

Selon une variante, le système de supervision fournit, pour un point, une mesure de la vitesse du point, et en ce que le calcul prend en compte l'incertitude de la mesure de la vitesse du point par le système de supervision.

Selon une autre variante, le calcul prend en compte l'incertitude sur l'accélération du point.

Selon encore une variante, l'accélération du point est bornée par une valeur maximale prédéterminée.

Selon encore une autre variante, le calcul comprend :

- le calcul d'une position moyenne du point à l'instant futur à partir de la position et de la vitesse mesurées par le système de supervision; et
- le calcul d'un ensemble de positions autour de cette position moyenne à partir de l'incertitude sur la position mesurée et sur la vitesse mesurée.

On peut encore prévoir que le procédé comprend en outre une étape de calcul d'une probabilité de collision avec le véhicule à l'instant futur, en sommant les probabilités de présence du point aux différentes positions de l'ensemble intersectant le véhicule.

Selon l'invention, le procédé comprend pour un objet dont deux points sont détectés par le système de supervision de l'environnement :

- la division de l'ensemble à des positions possibles de chaque point en au moins deux sous-ensembles;
- le tracé de segments de droites reliant les sous-ensembles correspondants des ensembles des deux points;

- le calcul d'une probabilité de collision de l'objet et du véhicule en sommant, pour un des deux points, les probabilités de présence du point dans les différents sous-ensembles reliés par des segments de droites intersectant le véhicule.

Selon une autre variante, le procédé comprend, pour un objet dont trois points ou plus sont détectés par le système de supervision de l'environnement :

- la division de l'ensemble des positions possibles de chaque point en au moins deux sous-ensembles ;
- le tracé de segments de droites reliant les sous-ensembles correspondants des ensembles de deux points adjacents;
- le calcul, pour chaque paire de points adjacents, de la somme, pour un des deux points, les probabilités de présence du point dans les différents sous-ensembles reliés par des segments de droites intersectant le véhicule; et
- le calcul d'une probabilité de collision de l'objet et du véhicule comme la valeur maximale de la probabilité calculée pour chaque paire de points adjacents.

L'invention a également pour objet un procédé de déclenchement d'un équipement de sécurité dans un véhicule, comprenant :

- le calcul d'une probabilité de collision avec le véhicule selon de tels procédés de traitement;
- le déclenchement de l'équipement en fonction de la probabilité calculée.

L'invention a encore pour objet un programme de traitement des résultats fournis par un système de supervision de l'environnement d'un véhicule, comprenant :

- une routine de réception de la position et le cas échéant de la vitesse d'un point fournis par le système de supervision;
- une routine de détermination d'une incertitude sur la position et le cas échéant d'une incertitude sur la vitesse du point;
- une routine de calcul, pour un point, d'un ensemble de positions possibles du point à un instant futur, à partir de la position reçue et de l'incertitude déterminée sur la position.

Selon une variante, la routine de calcul est une routine de calcul de l'ensemble des positions possibles à partir de la position reçue et de l'incertitude déterminée sur la position et d'une incertitude sur l'accélération du point.

Selon une autre variante, le programme comporte en outre :

- une routine de calcul d'une probabilité de collision avec le véhicule à l'instant futur, par sommation des probabilités de présence du point aux différentes positions de l'ensemble intersectant le véhicule.

Selon l'invention, la routine de réception est adaptée à recevoir une indication qu'un objet est détecté par deux points; et en ce qu'il comporte en outre :

- une routine de division de l'ensemble des positions possibles des deux points en au moins deux sous-ensembles;
- une routine de tracé de segments de droites reliant les sous-ensembles correspondants des ensembles des deux points;
- une routine de calcul d'une probabilité de collision de l'objet et du véhicule par sommation, pour un des deux points, des probabilités de présence du point dans les différents sous-ensembles reliés par des segments de droites intersectant le véhicule.

Selon encore une autre variante, la routine de réception est adaptée à recevoir une indication qu'un objet est détecté par au moins trois points; et en ce qu'il comporte en outre :

- une routine de division de l'ensemble des positions possibles de chaque point en au moins deux sous-ensembles;
- une routine de tracé de segments de droites reliant les sous-ensembles correspondants des ensembles de deux points adjacents;
- une routine de calcul, pour chaque paire de points adjacents, de la somme, pour un des deux points, les probabilités de présence du point dans les différents sous-ensembles reliés par des segments de droites intersectant le véhicule; et
- une routine de calcul d'une probabilité de collision de l'objet et du véhicule comme la valeur maximale de la probabilité calculée pour chaque paire de points adjacents.

L'invention concerne en outre un système de déclenchement d'équipements de sécurité d'un véhicule, comprenant un système de calcul embarqué avec une mémoire contenant un programme tel que décrit précédemment.

D'autres caractéristiques et avantages de l'invention apparaîtront à la lecture de la description qui suit de modes de réalisation de l'invention, donnée à titre d'exemple et en référence aux dessins annexés qui montrent:

- figures 1 et 2, une représentation schématique d'un véhicule et d'un objet détecté par un système de supervision de l'environnement,
- figure 3, une représentation schématique des positions possibles de l'objet dans le futur, selon un mode de réalisation de l'invention;
- figure 4, des exemples pour le calcul d'une probabilité de collision;
- figure 5, un graphe d'une probabilité de collision en fonction du temps;
- figure 6, une représentation d'un objet détecté par plusieurs points du système de supervision de l'environnement;
- figure 7, des exemples pour le calcul d'une probabilité de collision avec un objet détecté par plusieurs points du système de supervision de l'environnement;
- figure 8, un ordinogramme des étapes du procédé de l'invention.

L'invention propose, pour un véhicule muni d'un système de supervision de l'environnement, de prendre en compte, dans l'analyse des résultats fournis par le système, l'incertitude qui affecte ces résultats. Cette incertitude peut avoir pour source des erreurs de mesure de la position de l'objet, de la vitesse relative de l'objet par rapport au véhicule ou des autres informations utilisées. Elle peut aussi avoir pour source le comportement futur de l'objet ou du véhicule. La prise en compte de ces incertitudes permet un calcul de la probabilité de collision, pour un objet détecté par un ou plusieurs points du système de supervision de l'environnement.

Dans la suite de la description, l'invention est décrite en référence à un véhicule automobile; elle est plus généralement susceptible de s'appliquer pour tout système de supervision de l'environnement, même si celui-ci équipe un appareil fixe. Un tel système de supervision est connu en soi, et n'est pas décrit plus en détail ici : il peut notamment s'agir d'un système à base de radars, du genre décrit dans les documents de l'état de la technique mentionnés plus haut. On utilise dans la suite, sauf mention contraire, un repère orthonormé, lié au véhicule; la direction x est la direction de la vitesse du véhicule par rapport au sol, la direction y étant perpendiculaire.

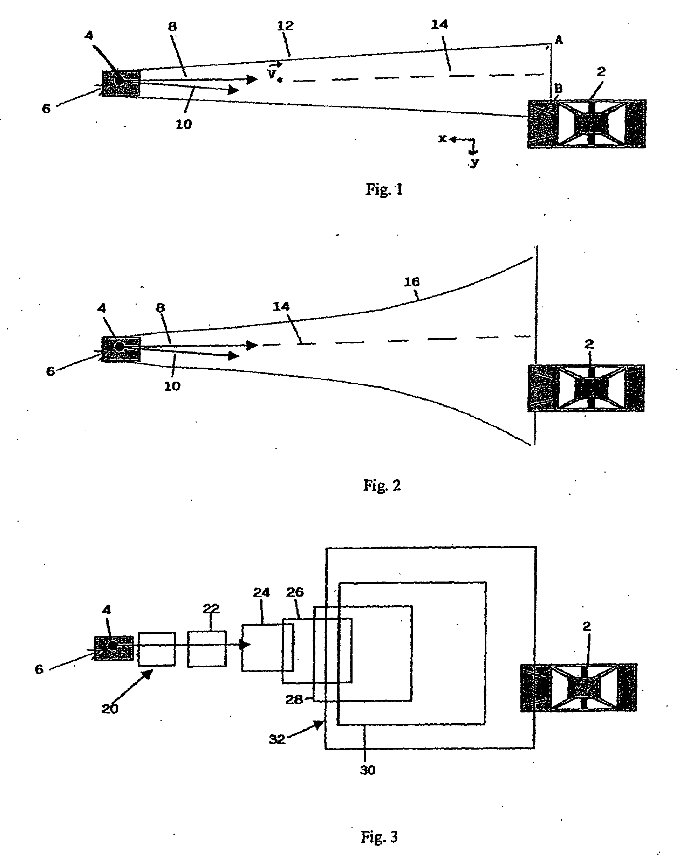

La figure 1 montre une représentation schématique d'un véhicule et d'un objet dont un point est détecté par un système de supervision de l'environnement. On a porté à la figure 2 un véhicule 2, muni du système de supervision de l'environnement. La référence 4 désigne un point détecté par le système de supervision de l'environnement; ce système identifie typiquement un tel point par ses coordonnées dans le repère.

La mesure de position dans le système de supervision de l'environnement est affectée d'une incertitude; la position du point 4 n'est donc connue qu'avec une incertitude, qui peut notamment être fonction dans un système à laser, de la largeur du faisceau, de la finesse du balayage par le faisceau laser et de la distance à laquelle se trouve le point. La position du point détecté n'est donc pas nécessairement exactement celle représentée sur la figure par la référence 4.

La figure 1 montre donc, autour du point 4, un ensemble 6 de positions possibles du point détecté; dans l'exemple, cet ensemble présente la forme d'un rectangle, dont la largeur et la longueur sont représentatives de la précision avec laquelle le point est détecté. Cette forme de l'ensemble 6 des positions possibles correspond à un mode de réalisation dans lequel le point 4 est repéré par des coordonnées (x, y) dans un repère cartésien; l'ensemble 6 peut alors être constitué par les points dont l'abscisse est dans l'intervalle $[x - \delta x; x + \delta x]$ et dont l'ordonnée est dans l'intervalle $[y - \delta y; y + \delta y]$, avec $\delta x$ et $\delta y$ les précisions respectives sur les positions mesurées. L'ensemble 6 pourrait présenter une forme différente, en fonction du système de supervision de l'environnement utilisé; par exemple, si le système de supervision utilise un balayage radial par un faisceau laser, l'ensemble 6 pourrait avoir la forme d'un secteur de couronne; l'angle de ce secteur correspondrait à l'incertitude sur l'angle du laser, tandis que l'épaisseur de la couronne correspondrait à l'incertitude sur la mesure de la distance. L'ensemble 6 pourrait aussi être défini, au lieu de considérer des plages possibles de coordonnées, par une collection de points; ces points peuvent être répartis plus ou moins uniformément autour du point 4 mesuré en fonction du système de supervision utilisé.

Dans l'exemple proposé à la figure 1, on considère un ensemble 6 de positions possibles de l'objet correspondant au point 4 détecté. Il est aussi possible de prendre en compte plus finement la précision sur la mesure. Ainsi, pour un système de supervision de l'environnement, il peut être plus probable que l'objet se trouve au point (x, y) détecté plutôt qu'en un point de coordonnées $(x - \delta x; y - \delta y)$, correspondant à un coin du rectangle 6; ceci peut être pris en compte en ajoutant à l'ensemble 6 une densité de probabilité de présence de l'objet; ceci peut correspondre par exemple à une gaussienne centrée sur le point mesuré.

Ainsi, l'ensemble 6 permet de prendre en compte les incertitudes sur la position du point détecté par le système de supervision de l'environnement; ces incertitudes dépendent du système de supervision; elles peuvent être stockées, ou calculées en fonction des points. La position de l'objet correspondant au point détecté n'est plus uniquement fournie par le point 4 détecté, mais est fournie par l'ensemble 6 des positions possibles.

Le système de supervision de l'environnement peut aussi fournir une mesure de la vitesse d'un obstacle détecté; il s'agit souvent d'une vitesse relative par rapport au véhicule dans le cas d'un système de détection embarqué; en prenant en compte la vitesse du véhicule, on peut aussi fournir une vitesse absolue de l'obstacle dans le repère terrestre. Comme la position, cette vitesse est affectée d'une incertitude : la figure 1 montre deux vecteurs 8 et 10, le vecteur 8 représente la vitesse $\bar{v}_0$ mesurée tandis que le vecteur 10 est un exemple d'un autre vecteur vitesse possible compte tenu de l'incertitude sur la mesure de la vitesse. Comme dans le cas de la position, on peut adopter diverses représentations pour définir un ensemble de vitesses possibles; on peut notamment considérer des plages de valeurs possibles des coordonnées du vecteur vitesse dans un repère, une collection de vecteurs vitesse possibles. On peut aussi stocker les incertitudes possibles, ou encore les calculer.

La figure montre encore, par les traits pointillés 12, l'ensemble des positions possibles de l'objet détecté dans le futur, compte tenu des incertitudes sur la position et sur la vitesse; la figure montre encore deux positions extrêmes A et B, qui sont les positions extrêmes de l'ensemble 12. En fonction des erreurs de mesure, l'objet réel pourrait avoir une position dans l'ensemble 12 qui se rapproche plus ou moins des points A ou B. Si l'objet se trouve au voisinage du point A, il n'y aura pas de collision, tandis que s'il se trouve au voisinage du point B, il y aura collision. Du fait des incertitudes de détection de la position et/ou de la vitesse, il n'est pas possible a priori dans l'exemple de la figure 1 de savoir si l'objet détecté va ou non heurter le véhicule.

Dans un premier mode de réalisation, l'invention propose donc de prendre en considération, dans un système de supervision de l'environnement, les incertitudes de mesure. En fonction du système de supervision et le cas échéant des résultats de la mesure, on peut prendre en considération uniquement les incertitudes sur la position, uniquement les incertitudes sur la vitesse, ou les deux.

Ceci peut être représenté par une trajectoire moyenne, affectée d'une incertitude. La trajectoire moyenne est alors donnée dans un repère cartésien lié au véhicule par les équations :

$$Posx(t) = Posx_0 + Vitrelx_0.t$$

$$Posy(t) = Posy_0 + Vitrely_0.t$$

avec les notations suivantes, $t_0$ étant l'instant de l'acquisition des données

- t : temps d'extrapolation ;
- $Posx(t)$ : la composante suivant x de la position relative d'un point de l'objet à l'instant t ;
- $Posy(t)$ : la composante suivant y de la position relative d'un point de l'objet à l'instant t ;
- $Posx_0$ : la composante suivant x de la position relative d'un point de l'objet à l'instant to;
- $Posy_0$ : la composante suivant y de la position relative d'un point de l'objet à l'instant $t_0$;
- $Vitrelx_0$ : la composante suivant x de la vitesse relative de l'objet à l'instant $t_0$ ;
- $Vitrely_0$ : la composante suivant y de la vitesse relative de l'objet à l'instant $t_0$ ; (t0 est l'instant de l'acquisition des données)

L'incertitude autour de la trajectoire moyenne peut être donnée par les équations suivantes :

$$Incx(t) = Errposx_0 + Errvitrx.t$$

$$Incy(t) = Errposy_0 + Errvitry.t$$

avec les notations suivantes :

- $Incx(t)$ : Incertitude sur x de position à l'instant t ;
- $Incy(t)$ : Incertitude sur y de position à l'instant t ;
- Errrposx : Erreur sur la position en x pouvant être commise par le système de supervision;
- Errrposy : Erreur sur la position en y pouvant être commise par le système de supervision;
- Errvitrx : Erreur sur la vitesse en x pouvant être commise par le système de supervision;

- Errvitry : Erreur sur la vitesse en y pouvant être commise par le système de supervision.

Une telle modélisation fournit un ensemble de trajectoires possibles, avec une allure du genre représenté en 12 sur la figure. On a représenté par le trait 14 la trajectoire moyenne de l'obstacle.

La figure 2 montre encore une représentation schématique d'un véhicule et d'un objet détecté par un système de supervision de l'environnement; on a représenté, comme à la figure 1, le véhicule 2, le point 4 détecté, l'ensemble 6 des positions possibles et deux vecteurs vitesses 8 et 10 possibles. Dans le mode de réalisation de la figure 2, on prend en compte non seulement les incertitudes sur la mesure de position ou de vitesse par le système de supervision de l'environnement, mais aussi les incertitudes sur le comportement futur; en d'autres termes, dans l'extrapolation de la trajectoire relative de l'obstacle détecté - ou de l'ensemble des trajectoires relatives possibles de l'obstacle - on prend en compte des actions possibles du conducteur du véhicule ou des changements de vitesse de l'objet, c'est-à-dire des événements susceptibles de se produire entre le moment de la détection et le moment possible de collision avec le véhicule.

En d'autres termes, ce mode de réalisation propose de tenir compte non seulement du comportement moyen, mais aussi des événements particuliers et soudains susceptibles de changer l'évolution future des objets.

Cette incertitude sur le comportement de l'objet ou du véhicule peut être modélisée par le fait qu'une accélération - longitudinale ou transversale - peut se produire à n'importe quel instant, pour une durée indéterminée. Cependant, s'agissant de systèmes de détection automobile, il est admis que l'accélération est limitée par l'adhérence, que ce soit pour le freinage ou la direction. Il est donc possible de modéliser le comportement futur par une limite sur l'accélération relative longitudinale ou transversale. Cette limite peut être fixée à une valeur donnée- par exemple 10 m.s$^{-2}$ pour un véhicule automobile et un obstacle, ou être mise à jour régulièrement par un système capable de mesurer des paramètres tels que l'adhérence au sol.

Pour un tel modèle, on a une incertitude autour de la trajectoire moyenne donnée par les équations suivantes :

$$Incx(t) = Errposx_0 + Errvitrx.t + Incaccx.t^2/2$$

$$Incy(t) = Errposy_0 + Errvitry.t + Incaccy.t^2/2$$

avec les notations suivantes :

- Incaccx : la composante suivant la direction x de l'incertitude sur l'évolution de la vitesse, modélisée par l'accélération maximale relative de l'objet suivant la direction x; et;
- Incaccy : la composante suivant la direction y de l'incertitude sur l'évolution de la vitesse, modélisée par l'accélération maximale relative de l'objet suivant la direction y.

L'accélération maximale relative de l'objet suivant la direction x est supposée négative - dans une stratégie de freinage pour éviter l'objet; l'accélération maximale relative de l'objet suivant la direction y peut être positive ou négative.

On obtient de nouveau un ensemble de trajectoires possibles, autour de la trajectoire moyenne 14; cet ensemble de positions possibles est représenté à la figure sous la référence 16. Les limites latérales de l'ensemble des trajectoires possibles sont des paraboles.

La figure 3 montre une autre représentation possible des positions possibles de l'objet dans le futur; la figure montre comme les figures 1 et 2 le véhicule 2, le point détecté 4 et l'ensemble 6 des positions possibles à l'instant $t_0$. Elle montre aussi l'ensemble des positions possibles à différents instants $t_1$ à $t_7$, qui sont référencés 20, 22, 24, 26, 28, 30 et 32 sur la figure. Ces différents ensembles peuvent être obtenus par les mêmes équations que celles proposées en référence à la figure 2; on considère simplement non pas les trajectoires possibles, mais les points possibles à un instant donné.

Les modes de réalisation décrits jusqu'à présent prennent en compte, dans la prédiction des trajectoires d'un obstacle par rapport à un véhicule muni d'un système de supervision de l'environnement, les incertitudes liées à la mesure ou aux comportements futurs du véhicule et de l'obstacle.

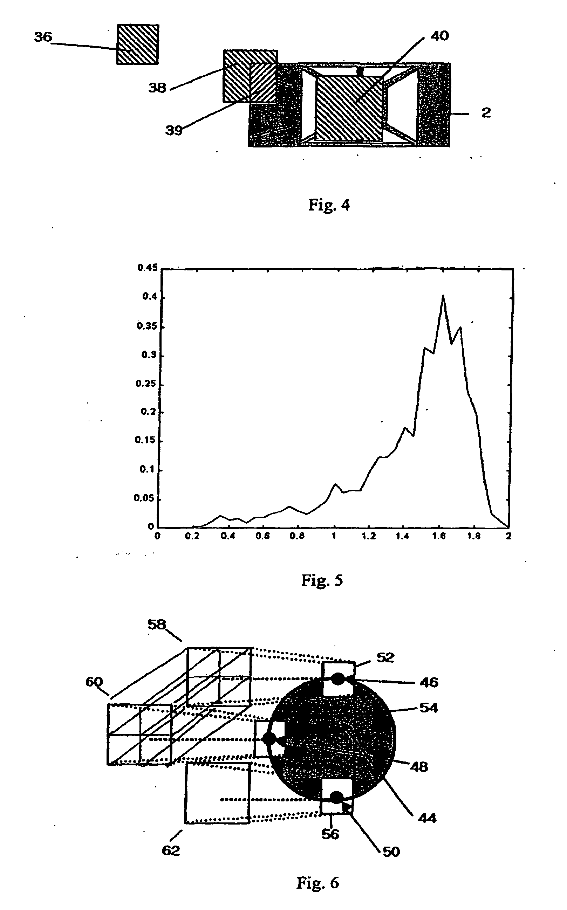

Il devient ainsi possible de définir une probabilité de collision entre le véhicule et l'obstacle; cette probabilité peut être fournie, pour un ensemble de trajectoires, en affectant une probabilité à chaque trajectoire, et en sommant les probabilités des trajectoires rencontrant le véhicule. Un calcul plus simple de la probabilité de collision est maintenant décrit en référence à la figure 4. Cette figure montre le véhicule 2, ainsi que trois ensembles 36, 38 et 40 de positions possibles d'un obstacle; il peut s'agir des positions possibles d'un même obstacle à différents instants, ou de positions de différents obstacles.

Dans ce mode de réalisation, on procède au calcul de la probabilité de collision avec un obstacle en considérant la proportion de l'ensemble des positions possibles occupée par le véhicule. En d'autres termes, on calcule la probabilité de collision en considérant le rapport entre

- la surface de l'intersection entre le véhicule et l'ensemble des positions possibles, et
- la surface de l'ensemble des positions possibles de l'obstacle.

Dans l'exemple de l'ensemble 36 de la figure, la probabilité de collision est nulle, à l'instant t correspondant à cet ensemble. De fait, quelle que soit la position de l'objet dans l'ensemble 36, il n'entre pas en contact avec le véhicule. Dans l'ensemble 40 de la figure, le véhicule recouvre l'ensemble des positions possibles; la probabilité de collision est donc de 100%.

Dans l'exemple de l'ensemble 38 de la figure 4, une partie de l'ensemble des positions de l'objet est dans l'espace occupé par le véhicule, on ne peut affirmer avec certitude s'il y aura collision ou non; on calcule alors la probabilité comme étant la portion 39 de l'ensemble 38 comprise dans l'espace occupé par le véhicule, qui dans l'exemple est de l'ordre de 40%.

Dans l'exemple ci-dessus, la probabilité pour l'ensemble 38 est obtenue par un simple rapport des surfaces; cette solution est adaptée lorsque la probabilité de présence du point dans l'ensemble des positions possibles est uniformément répartie. Dans le cas où l'erreur de mesure du système de supervision ne serait pas uniformément répartie autour de la valeur mesurée, on peut prendre en compte cette répartition dans le calcul de la probabilité de collision. Le calcul peut alors être une intégrale surfacique de la probabilité de présence dans l'ensemble, limité à la surface intersectée par le véhicule. Dans un cas comme dans l'autre, le calcul de la probabilité revient à sommer les probabilités de présence du point aux différentes positions de l'ensemble des positions possibles intersectant le véhicule. Dans le cas d'une distribution uniforme de probabilité, le calcul revient à un calcul de surface; pour un nuage de points, le calcul est une somme discrète; pour une distribution non-uniforme de probabilité, le calcul est une intégrale surfacique.

Pour un obstacle, le calcul peut s'effectuer pour différents instants, après l'instant de la mesure; dans l'exemple de la figure 3, on pourrait calculer pour chacun des ensembles représentés, i. e. pour chacun des instants $t_1$ à $t_7$ la probabilité d'une collision, avec le procédé décrit en référence à la figure 4. Ainsi, il est possible de connaître l'évolution de la probabilité de collision en fonction du temps; cette probabilité peut être représentée sous la forme d'un graphe du genre de celui de la figure 5. Celui-ci montre en abscisse le temps, et en ordonnées la probabilité de collision.

Un tel calcul peut être fait de façon continue ou discrète, avec un pas de temps plus ou moins grand selon les besoins du système de protection utilisant l'information. Cette information est ensuite mise à disposition du système de protection du véhicule, pour la commande d'équipements de sécurité ou pour générer des alertes à destination du conducteur.

Dans la description qui précède, on a considéré l'exemple d'un obstacle détecté par un seul point. Or certains systèmes de supervision sont capables de décrire par plus d'un point chaque objet détecté, ou certains objets. Ces systèmes fournissent une représentation plus fine du contour de l'objet. La figure 6 montre une représentation d'un objet détecté par plusieurs points du système de supervision de l'environnement; l'objet 44 - un poteau dans l'exemple - est détecté plusieurs fois par le système de supervision de l'environnement, qui détecte trois points $M_1$, $M_2$ et $M_3$, aux positions référencées 46, 48 et 50 à l'instant $t_0$. Le système de supervision de l'environnement peut aussi fournir une indication que les points détectés appartiennent au même objet.

Comme décrit plus haut, à chacun des points peut être affecté un ensemble de positions possibles, comme représenté par 52, 54 et 56 sur la figure 6.

La prédiction de trajectoire peut aussi être appliquée à chacun de ces points, de la même façon que décrit plus haut : à partir d'une prédiction de trajectoire qui tiennent compte des incertitudes et des erreurs de mesure, on détermine, pour chaque instant t à venir, l'ensemble des positions possibles de chaque point de l'objet. La figure 6 montre donc les ensembles 58, 60 et 62 des positions possibles des trois points $M_1$, $M_2$ et $M_3$, à un instant $t_1$. On a représenté à la figure un calcul du genre de celui décrit à la figure 1, pour des raisons de simplicité de la figure; on pourrait aussi procéder à un calcul du genre décrit en référence à la figure 2. On a aussi porté à la figure la trajectoire moyenne et l'enveloppe des trajectoires possibles entre les instants $t_0$ et $t_1$.

Il est avantageux, pour le calcul de la probabilité de collision, de tenir compte du fait que les points appartiennent au même objet, et qu'une partie de l'objet est présente entre deux positions successives. Autrement dit, on considère que l'objet détecté n'est pas ponctuel, mais présente un certain volume, et on corrèle les probabilités de collision entre les différents points de l'objet.

Pour cela, dans un mode de réalisation, il est de diviser chaque ensemble de positions possibles en sous-ensembles, et de relier les sous-ensembles correspondants. Ceci est représenté à la figure 6, dans l'exemple des ensembles 58 et 60 pour les points $M_1$ et $M_2$. Chaque ensemble 58 et 60 est divisé en 4 sous-ensembles, avec une probabilité de présence identique dans le cas le plus simple. Du fait que les points détectés appartiennent à un même objet - que l'on suppose indéformable - si un point détecté se trouve dans un des sous-ensembles, alors l'autre point se trouve dans le même sous-ensemble. Par exemple, si à l'instant $t_1$ le point $M_1$ se trouve dans le sous-ensemble supérieur gauche (dans le sens de la figure) de l'ensemble 58, alors le point $M_2$ se trouve aussi dans le sous-ensemble supérieur gauche (dans le sens de la figure) de l'ensemble 60.

On relie alors les sous-ensembles correspondants, comme représenté sur la figure 6; ceci définit une portion ou segment reliant les deux sous-ensembles. La probabilité de collision avec un véhicule peut être évaluée

- en déterminant ceux des portions ou segments qui sont intersectés par le véhicule, et
- en sommant la probabilité de présence d'un point dans chacun des sous-ensembles ainsi intersectés.

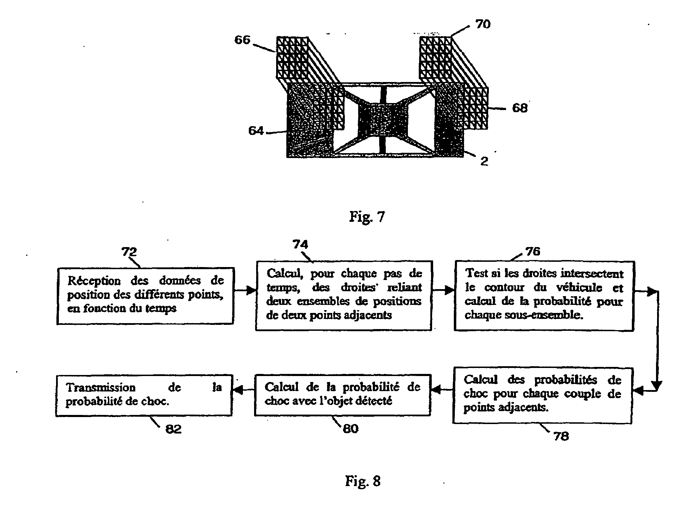

La figure 7 montre un exemple de calcul d'une telle probabilité; on a représenté à la figure deux exemples du cas d'un objet détecté par deux points du système de supervision de l'environnement; les ensembles 64 et 66 sont les ensembles des lieux possibles de ces deux points dans un premier exemple, tandis que les ensembles 68 et 70 sont les ensembles des lieux possibles des deux points dans un deuxième exemple; on a dans chaque cas découpé ces ensembles en vingt-cinq sous-ensembles. Pour la simplicité de l'explication, on suppose une répartition uniforme de la probabilité de présence dans ces sous-ensembles, de sorte que la probabilité de présence d'un point dans un sous-ensemble est de 1/25. La figure montre aussi le véhicule 2. Dans le premier exemple, le véhicule intersecte tous les segments ou portions reliant les sous-ensembles des ensembles 64 et 66; la probabilité de collision avec l'objet détecté par les deux points est de 100%; en revanche, dans le deuxième exemple, le véhicule intersecte 22 des 25 segments ou portions reliant les sous-ensembles; la probabilité de collision avec l'objet détecté par les deux points est de 22/25.

Le procédé de la figure 7 permet ainsi de calculer une probabilité de collision pour un objet détecté par deux points ou plus. Pour un objet détecté par deux points, on procède au calcul représenté à la figure 7. Pour un objet détecté par plus de deux points, on peut répéter le calcul de la figure 7, par paire de points adjacents de l'objet. Les points adjacents sont des points du même objet se succédant dans un balayage de l'objet par le système de supervision. Ainsi, dans l'exemple de la figure 6, on procéderait d'abord au calcul des segments intersectés reliant les sous-ensembles des ensembles 58 et 60, puis au calcul des segments intersectés reliant les sous-ensembles des ensembles 60 et 62. La probabilité de collision avec l'obstacle est dans ce cas la probabilité la plus forte obtenue pour une paire de points de l'obstacle.

Cette solution peut être utilisée quel que soit le moyen de détection mis en oeuvre et la méthode d'extrapolation retenue. Comme expliqué en référence à la figure 6, le calcul de cette probabilité est avantageusement faite pour chaque instant auquel on souhaite connaître la probabilité de choc. La fréquence et la précision - directement fonction du nombre n de sous-ensembles - du calcul est à optimiser en fonction de l'application utilisant l'information.

La figure 8 est un ordinogramme des étapes du procédé de l'invention, dans l'exemple d'un système de supervision de l'environnement qui permette la détection d'un même objet par plusieurs points. L'ordinogramme concerne le traitement appliqué à un objet, le traitement pouvant être répété pour tous les objets détectés. Dans une première étape 72, on reçoit les données de position et le cas échéant de vitesse relative des différents points, en fonction du temps. A partir de ces données, dans une étape 74, on calcule, pour chaque pas de temps, les ensembles de positions possibles des différents points détectés; on sépare ces ensembles en sous-ensembles, et on calcule des segments de droites reliant deux ensembles de positions de deux points adjacents. A l'étape 76, on teste si les segments de droite intersectent le contour du véhicule, et on calcule la probabilité de chaque sous-ensemble. Ensuite, à l'étape 78, on calcule la probabilité de choc pour chaque couple de points adjacents. A l'étape 80, on calcule la probabilité de choc avec l'objet, en considérant la valeur maximale de la probabilité pour les différents couples de points adjacents. La probabilité de choc peut ensuite être transmise, à l'étape 82, pour être exploitée afin de commander des équipements de sécurité ou alerter le conducteur.

D'un point de vue matériel, l'invention peut être mise en oeuvre à partir de systèmes de supervision de l'environnement connus en soi; il suffit d'y adjoindre, dans un processeur ou tout autre moyen de calcul, des valeurs d'incertitudes pour permettre le calcul des ensembles de positions décrit plus haut. Les autres étapes de calcul sont mises en oeuvre dans le ou les moyens de calcul, suivant les explications fournies plus haut.

Le système de calcul peut être implémenté à l'aide d'un processeur dédié ou d'un autre moyen de calcul. Il met en oeuvre un programme de traitement des informations fournies par les capteurs, qui est stocké dans la mémoire associée; ce programme présente une routine de réception de la position et le cas échéant de la vitesse d'un point fournis par le système de supervision; celle-ci est adaptée à recevoir les positions et vitesses des points détectés; le cas échéant, elle est aussi adaptée à recevoir de la part du système de supervision de l'environnement l'indication que certains points détectés correspondent à un même objet.

Le programme présente en outre une routine de détermination d'une incertitude sur la position et le cas échéant d'une incertitude sur la vitesse des points. On peut utiliser des tables stockées en mémoire, ou des algorithmes de calcul fonction notamment de la position des points détectés, du nombre de fois où ils ont été détectés, etc.

Le programme présente enfin une routine de calcul, pour un point, d'un ensemble de positions possibles du point à un instant futur, à partir de la position reçue et de l'incertitude déterminée sur la position; le cas échéant, on utilise aussi les informations de vitesse et les incertitudes sur la vitesse, ainsi que les valeurs limites de l'accélération admissible. Le calcul peut s'effectuer suivant l'un des modes de réalisation décrits plus haut.

Le programme peut encore présenter une ou plusieurs routines de calcul de probabilité de collision; dans le cas d'un objet détecté par un point unique, la routine peut calculer la probabilité de collision comme expliqué en référence à la figure 4, par sommation des probabilités de présence du point aux différentes positions de l'ensemble intersectant le véhicule. Dans le cas d'un objet représenté par deux points, les routines peuvent procéder comme expliqué en référence aux figures 6 et 7. On peut alors prévoir :

- une routine de division de l'ensemble des positions possibles des deux points en au moins deux sous-ensembles;
- une routine de tracé de segments de droites reliant les sous-ensembles correspondants des ensembles des deux points; et
- une routine de calcul d'une probabilité de collision de l'objet et du véhicule par sommation, pour un des deux points, les probabilités de présence du point dans les différents sous-ensembles reliés par des segments de droites intersectant le véhicule.

Dans le cas d'un objet repéré par plus de trois points du système de supervision, on procède par paire de points adjacents, et les routines peuvent présenter :

- une routine de division de l'ensemble des positions possibles de chaque point en au moins deux sous-ensembles;
- une routine de tracé de segments de droites reliant les sous-ensembles correspondants des ensembles de deux points adjacents;
- une routine de calcul, pour chaque paire de points adjacents, de la somme, pour un des deux points, les probabilités de présence du point dans les différents sous-ensembles reliés par des segments de droites intersectant le véhicule; et
- une routine de calcul d'une probabilité de collision de l'objet et du véhicule comme la valeur maximale de la probabilité calculée pour chaque paire de points adjacents.

On entend ici par routine un ensemble d'instructions apte à commander le fonctionnement d'un processeur pour réaliser une fonction. Le programme est stocké dans la mémoire d'un système de calcul embarqué; il est exécuté de façon connue en soi par chargement dans la mémoire vive du système de calcul.

La fréquence de traitement de l'information pourra être fixée par la fréquence de délivrance du système de supervision de l'environnement, et est de préférence supérieure à 40Hz, pour une réactivité suffisante du système.

La solution proposée tient compte des erreurs et incertitudes du système de supervision de l'environnement. Il n'est donc pas nécessaire d'utiliser un système extrêmement complexe et très précis pour appliquer cette solution, et pour avoir une information de probabilité de collision qui soit fiable. Une telle information peut permettre de gérer le déclenchement des moyens de protections habitacles. Ainsi, on n'évitera les fausses alarmes car on saura si la collision va vraiment avoir lieu ou non. D'un autre côté, on peut aussi générer une alarme très tôt pour des systèmes réversibles qui peuvent être déclenchés, même si le risque de collision est inférieur à 100%; ce peut être le cas pour les systèmes de freinage automatique, ou pour les systèmes d'alerte au conducteur du véhicule.

Un autre avantage de la solution est d'être valable qu'elle que soit la dynamique des objets, en face avant ou en latéral du véhicule, pour des objets fixes ou mobiles.

Bien entendu, la présente invention n'est pas limitée aux exemples et modes de réalisation décrits et représentés, mais elle est susceptible de nombreuses variantes accessibles à l'homme de l'art. On peut notamment modifier les valeurs numériques proposées dans les différents exemples. L'ordre des différentes étapes du procédé de la figure 8 peut être modifié : à titre d'exemple, on peut calculer les probabilités attachées à chaque sous-ensemble avant de calculer les segments de droites reliant les sous-ensembles. On peut aussi utiliser d'autres modes de calcul des incertitudes que ceux évoqués plus haut, en fonction des systèmes de supervision considérés; les ensembles de points peuvent aussi présenter des formes ou des représentations différentes de celles proposées aux figures.

**Revendications**

1. Un procédé de supervision de l'environnement d'un véhicule (2) comprenant:

   - la mesure par un système de supervision de l'environnement de la position d'au moins un point et
   - le calcul, pour un point dont la position (4) est mesurée par le système de supervision de l'environnement, d'un ensemble (6) de positions possibles du point, le calcul prenant en compte l'incertitude de la mesure de la position du point par le système de supervision,

**caractérisé en ce que** :

- le calcul d'un ensemble de positions possibles du point est réalisé à un instant futur et **en ce que**
- le procédé comprend pour un objet dont deux points sont détectés par le système de supervision de l'environnement :

- la division de l'ensemble (58, 60) à des positions possibles de chaque point en au moins deux sous-ensembles ;
- le tracé de segments de droites reliant les sous-ensembles correspondants des ensembles des deux points ;
- le calcul d'une probabilité de collision de l'objet et du véhicule (2) en sommant, pour un des deux points, les probabilités de présence du point dans les différents sous-ensembles relies par des segments de droites intersectant le véhicule.

2. Le procédé de la revendication 1, **caractérisé en ce que** le système de supervision fournit, pour un point, une mesure de la vitesse du point, et **en ce que** le calcul prend en compte l'incertitude de la mesure de la vitesse du point par le système de supervision.

3. Le procédé de la revendication 1 ou 2, **caractérisé en ce que** le calcul prend en compte l'incertitude sur l'accélération du point.

4. Le procédé de la revendication 3, **caractérisé en ce que** l'accélération du point est bornée par une valeur maximale prédéterminée.

5. Le procédé de l'une des revendications 2 à 4, **caractérisé en ce que** le calcul comprend :

- le calcul d'une position moyenne du point à l'instant futur à partir de la position et de la vitesse mesurées par le système de supervision; et
- le calcul d'un ensemble de positions autour de cette position moyenne à partir de l'incertitude sur la position mesurée et sur la vitesse mesurée.

6. Le procédé de l'une des revendications 1 à 5, **caractérisé en ce qu'**il comprend en outre une étape de calcul d'une probabilité de collision avec le véhicule à l'instant futur, en sommant les probabilités de présence du point aux différentes positions de l'ensemble intersectant le véhicule.

7. Le procédé de l'une des revendications 1 à 6, **caractérisé en ce qu'**il comprend, pour un objet dont trois points ou plus sont détectés par le système de supervision de l'environnement :

- la division de l'ensemble (58, 60, 62) des positions possibles de chaque point en au moins deux sous-ensembles;
- le tracé de segments de droites reliant les sous-ensembles correspondants des ensembles de deux points adjacents;
- le calcul, pour chaque paire de points adjacents, de la somme, pour un des deux points, des probabilités de présence du point dans les différents sous-ensembles reliés par des segments de droites intersectant le véhicule; et
- le calcul d'une probabilité de collision de l'objet et du véhicule comme la valeur maximale de la probabilité calculée pour chaque paire de points adjacents.

8. Un procédé de déclenchement d'un équipement de sécurité dans un véhicule, comprenant :

- le calcul d'une probabilité de collision avec le véhicule selon le procédé de la revendication 1, 6 ou 7;
- le déclenchement de l'équipement en fonction de la probabilité calculée.

9. Un programme de traitement des résultats fournis par un système de supervision de l'environnement d'un véhicule, comprenant :

- une routine de réception de la position et le cas échéant de la vitesse d'un point fournis par le système de supervision;

- une routine de détermination d'une incertitude sur la position et le cas échéant d'une incertitude sur la vitesse du point;
- une routine de calcul, pour un point, d'un ensemble de positions possibles du point, à partir de la position reçue et de l'incertitude déterminée sur la position,

**caractérisé en ce que** :

- le calcul d'un ensemble de positions possibles du point est réalisé à un instant futur, **en ce que**
- la routine de réception est adaptée à recevoir une indication qu'un objet est détecté par deux points et **en ce que**
- le programme comporte en outre :

- une routine de division de l'ensemble des positions possibles des deux points en au moins deux sous-ensembles;
- une routine de tracé de segments de droites reliant les sous-ensembles correspondants des ensembles des deux points;
- une routine de calcul d'une probabilité de collision de l'objet et du véhicule par sommation, pour un des deux points, des probabilités de présence du point dans les différents sous-ensembles reliés par des segments de droites intersectant le véhicule.

10. Le programme de la revendication 9, **caractérisé en ce que** la routine de calcul est une routine de calcul de l'ensemble des positions possibles à partir de la position reçue et de l'incertitude déterminée sur la position et d'une incertitude sur l'accélération du point.

11. Le programme de la revendication 9 ou 10, **caractérisé en ce qu'**il comporte en outre :

- une routine de calcul d'une probabilité de collision avec le véhicule à l'instant futur, par sommation des probabilités de présence du point aux différentes positions de l'ensemble intersectant le véhicule.

12. Le programme de l'une des revendications 9 à 11, **caractérisé en ce que** la routine de réception est adaptée à recevoir une indication qu'un objet est détecté par au moins trois points; et **en ce qu'**il comporte en outre :

- une routine de division de l'ensemble des positions possibles de chaque point en au moins deux sous-ensembles;
- une routine de tracé de segments de droites reliant les sous-ensembles correspondants des ensembles de deux points adjacents;
- une routine de calcul, pour chaque paire de points adjacents, de la somme, pour un des deux points, des probabilités de présence du point dans les différents sous-ensembles reliés par des segments de droites intersectant le véhicule; et
- une routine de calcul d'une probabilité de collision de l'objet et du véhicule comme la valeur maximale de la probabilité calculée pour chaque paire de points adjacents.

13. Un système de déclenchement d'équipements de sécurité d'un véhicule, comprenant un système de calcul embarqué avec une mémoire contenant un programme selon l'une des revendications 9 à 12.

**Claims**

1. A method for monitoring the environment of a vehicle (2) comprising:

- measuring, by an environment monitoring system the position of at least one point and
- calculating, for a point the position (4) of which is measured by the system for monitoring the environment, a set (6) of possible positions of the point, the calculation taking account of uncertainty in measurement of the position of the point by the monitoring system,

**characterised in that**:

calculation of a set of possible positions of the point is performed at a future instant, and **in that**
the method comprises, for an object, two points of which are sensed by the environment monitoring system:

- dividing the set (58,60) at possible positions of each point into at least two subsets;
- tracing straight line segments joining the corresponding subsets of the sets of two points;
- calculating a probability of collision of the object and the vehicle (2) by summing, for one of the two points, the probabilities of presence of the point in the various subsets joined by straight line segments intersecting the vehicle.

2. The method of claim 1, **characterized in that** the monitoring system supplies, for a point, a measurement of the velocity of the point, and **in that** the calculation takes account of uncertainty in measuring the velocity of the point by the monitoring system.

3. The method of claim 1 or 2, **characterized in that** calculation takes account of uncertainty regarding acceleration of the point.

4. The method of claim 3, **characterized in that** the acceleration of the point is bounded by a predetermined maximum value.

5. The method of one of claims 2 - 4, **characterized in that** calculation comprises:

- calculating a mean position of the point at the future instant using the position and velocity measured by the monitoring system; and
- calculating a set of positions around this mean position, from the uncertainty of the position measured and of the velocity measured.

6. The method of one of claims 1-5, **characterized in that** it further comprises a step of calculating a probability of collision with the vehicle at the future instant, by summing the probabilities of presence of the point at the different positions of the set that intersect the vehicle.

7. The method of one of claims 1-6, **characterized in that** it comprises, for an object three points or more of which are detected by the environment monitoring system:

- dividing the set (58, 60, 62) of possible positions of each point into at least two sub-sets;
- tracing straight line segments joining the corresponding sub-sets of sets of two
- calculating, for each pair of adjacent points, the sum for one of the two points, the probabilities of presence of the point in the various sub-sets joined by straight lines segments intersecting the vehicle; and
- calculating a probability of collision of the object and the vehicle as the maximum value of the probability calculated for each pair of adjacent points.

8. A method for setting off an item of safety equipment in a vehicle, comprising:

- calculating a probability of collision with the vehicle according to the method of claim 1, 6 or 7;
- setting off the item of equipment as a function of the calculated probability.

9. A program for processing the results supplied by a vehicle environment monitoring system, comprising:

- a routine for receiving the position and, if appropriate, the velocity of a point supplied by the monitoring system;
- a routine for determining an uncertainty of the position and, if appropriate, an uncertainty of the velocity of the point;
- a routine for calculating, for one point, the set of possible positions of the point, starting from the position received and from the uncertainty determined for the position,

**characterized in that**:

calculation of a set of possible positions of the point is performed at a future instant, and **in that**

- the routine for receiving is adapted to receive an indication that an object has been detected by two points, and **in that**
- the program further includes:

- a routine for dividing the set of possible positions of the two points into at least two sub-sets;
- a routine for tracing straight line segments that join the corresponding sub-sets of the sets of two points;
- a routine for calculating a probability of collision of the object and of the vehicle by summing, for one of the two points, probabilities of the presence of the point in the various subsets joined by straight line segments intersecting the vehicle.

10. The program of claim 9, **characterized in that** the calculation routine is a routine for calculating the set of possible positions from the position received and from the uncertainty determined for the position and an uncertainty determined for the acceleration of the point.

11. The program of claim 9 or 10, **characterized in that** it further includes:

   - a routine for calculating a probability of collision with the vehicle at the future instant, by summing the probabilities of presence of the point at the various positions of the set intersecting the vehicle.

12. The program of one of claims 9 to 11, **characterized in that** the routine for receiving is adapted to receive an indication that an object has been detected by at least three points, and that it further includes:

   - a routine for dividing the set of possible positions of each point into at least two sub-sets;
   - a routine for tracing straight line segments joining the corresponding sub-sets of the sets of two adjacent points;
   - a routine for calculating, for each pair of adjacent points, the sum, for one of the two points, of the probabilities of presence of the point in the various sub-sets joined by straight line segments intersecting the vehicle; and
   - a routine for calculating a probability of collision of the object and the vehicle as the maximum value of the calculated probability for each pair of adjacent points.

13. A system for setting off safety equipment in a vehicle, comprising an on-board calculating system with a memory containing a program according to one of claims 9-12.

**Patentansprüche**

1. Verfahren zur Überwachung der Umgebung eines Fahrzeugs (2), umfassend:

   - die Messung der Position von wenigstens einem Punkt durch ein Umgebungsüberwachungssystem und
   - die Berechnung für einen Punkt, dessen Position (4) durch das Umgebungsüberwachungssystem gemessen ist, einer Menge (6) von möglichen Positionen des Punktes, wobei die Berechnung die Unsicherheit der Messung der Position des Punktes durch das Überwachungssystem berücksichtigt,

   **dadurch gekennzeichnet, dass**:

   - die Berechnung einer Menge von möglichen Positionen des Punktes zu einem zukünftigen Zeitpunkt bewerkstelligt wird und dass
   - das Verfahren für ein Objekt, von welchem zwei Punkte durch das Umgebungsüberwachungssystem erfasst sind, umfasst:

      - die Teilung der Menge (58, 60) von möglichen Positionen jedes Punktes in wenigstens zwei Untermengen;
      - das Legen von Geradensegmenten, welche die entsprechenden Untermengen der Mengen der zwei Punkte verbinden;
      - die Berechnung einer Kollisionswahrscheinlichkeit des Objekts und des Fahrzeugs (2), indem für einen der zwei Punkte die Vorhandenseinswahrscheinlichkeiten des Punktes in den unterschiedlichen Untermengen, welche durch das Fahrzeug schneidende Geradensegmente verbunden sind, summiert werden.

2. Verfahren nach Anspruch 1, **dadurch gekennzeichnet, dass** das Überwachungssystem für einen Punkt eine Messung der Geschwindigkeit des Punktes liefert und dass die Berechnung die Unsicherheit der Messung der Geschwindigkeit des Punktes durch das Überwachungssystem berücksichtigt.

3. Verfahren nach Anspruch 1 oder 2, **dadurch gekennzeichnet, dass** die Berechnung die Unsicherheit auf der Beschleunigung des Punktes berücksichtigt.

4. Verfahren nach Anspruch 3, **dadurch gekennzeichnet, dass** die Beschleunigung des Punktes durch einen vorbestimmten Maximalwert begrenzt ist.

5. Verfahren nach einem der Ansprüche 2-4, **dadurch gekennzeichnet, dass** die Berechnung umfasst:

   - die Berechnung einer mittleren Position des Punktes zu dem zukünftigen Zeitpunkt ausgehend von der durch das Überwachungssystem gemessenen Position und Geschwindigkeit; und
   - die Berechnung einer Menge von Positionen um diese mittlere Position herum ausgehend von der Unsicherheit auf der gemessenen Position und auf der gemessenen Geschwindigkeit.

6. Verfahren nach einem der Ansprüche 1-5, **dadurch gekennzeichnet, dass** es außerdem einen Schritt zur Berechnung einer Kollisionswahrscheinlichkeit mit dem Fahrzeug zu dem zukünftigen Zeitpunkt umfasst, indem die Vorhandenseinswahrscheinlichkeiten des Punktes an unterschiedlichen Positionen der das Fahrzeug schneidenden Menge summiert werden.

7. Verfahren nach einem der Ansprüche 1-6, **dadurch gekennzeichnet, dass** es für ein Objekt, von welchem drei Punkte oder mehr durch das Umgebungserfassungssystem erfasst sind, umfasst:

   - das Teilen der Menge (58, 60, 62) von möglichen Positionen jedes Punktes in wenigstens zwei Untermengen;
   - das Legen von Geradensegmenten, welche die entsprechenden Untermengen der Mengen von zwei benachbarten Punkten verbinden;
   - die Berechnung, für jedes Paar von benachbarten Punkten, der Summe, für einen der zwei Punkte, der Vorhandenseinswahrscheinlichkeiten des Punktes in den unterschiedlichen Untermengen, welche durch das Fahrzeug schneidende Geradensegmente verbunden sind; und
   - die Berechnung einer Kollisionswahrscheinlichkeit des Objekts und des Fahrzeugs als Maximalwert der für jedes Paar von benachbarten Punkten berechneten Wahrscheinlichkeit.

8. Verfahren zum Auslösen einer Sicherheitseinrichtung in einem Fahrzeug, umfassend:

   - die Berechnung einer Kollisionswahrscheinlichkeit mit dem Fahrzeug gemäß dem Verfahren nach dem Anspruch 1, 6 oder 7;
   - das Auslösen der Einrichtung abhängig von der berechneten Wahrscheinlichkeit.

9. Verarbeitungsprogramm für durch ein Umgebungsüberwachungssystem eines Fahrzeugs gelieferte Ergebnisse, umfassend:

   - eine Aufnahmeroutine für die Position und gegebenenfalls die Geschwindigkeit eines Punktes, welche durch das Überwachungssystem geliefert werden;
   - eine Routine zur Bestimmung einer Unsicherheit auf der Position und gegebenenfalls einer Unsicherheit auf der Geschwindigkeit des Punktes;
   - eine Routine zur Berechnung, für einen Punkt, einer Menge von möglichen Positionen des Punktes ausgehend von der aufgenommenen Position und der auf der Position bestimmten Unsicherheit,

   **dadurch gekennzeichnet, dass**:

   - die Berechnung einer Menge von möglichen Positionen des Punktes zu einem zukünftigen Zeitpunkt bewerkstelligt wird und dass
   - die Aufnahmeroutine dazu ausgestaltet ist, eine Anzeige aufzunehmen, dass ein Objekt durch zwei Punkte erfasst wurde und dass
   - das Programm außerdem beinhaltet:

     - eine Routine zur Teilung der Menge von möglichen Positionen der zwei Punkte in wenigstens zwei Untermengen;
     - eine Routine zum Legen von Geradensegmenten, welche die entsprechenden Untermengen der Mengen der zwei Punkte verbinden;
     - eine Routine zur Berechung einer Kollisionswahrscheinlichkeit des Objekts und des Fahrzeugs durch Summierung, für einen der zwei Punkte, der Vorhandenseinswahrscheinlichkeiten des Punktes in den unterschiedlichen Untermengen, welche durch das Fahrzeug schneidende Geradensegmente verbunden sind.

**10.** Programm nach Anspruch 9, **dadurch gekennzeichnet, dass** die Berechnungsroutine eine Routine zur Berechnung der Menge von möglichen Positionen ausgehend von der erfassten Position und der auf der Position bestimmten Unsicherheit und einer Unsicherheit auf der Beschleunigung des Punktes ist.

**11.** Programm nach Anspruch 9 oder 10, **dadurch gekennzeichnet, dass** es außerdem beinhaltet:

- eine Routine zur Berechnung einer Kollisionswahrscheinlichkeit mit dem Fahrzeug zu dem zukünftigen Zeitpunkt durch Summierung von Vorhandenseinswahrscheinlichkeiten des Punktes an unterschiedlichen Positionen der das Fahrzeug schneidenden Menge.

**12.** Programm nach einem der Ansprüche 9-11, **dadurch gekennzeichnet, dass** die Aufnahmeroutine dazu ausgestaltet ist, eine Anzeige aufzunehmen, dass ein Objekt durch wenigstens drei Punkte erfasst ist; und dass es außerdem beinhaltet:

- eine Routine zur Teilung der Menge von möglichen Positionen jedes Punktes in wenigstens zwei Untermengen;
- eine Routine zum Legen von Geradensegmenten, welche die entsprechenden Untermengen der Mengen von zwei benachbarten Punkten verbinden;
- eine Routine zur Berechnung, für jedes Paar von benachbarten Punkten, der Summe, für einen der zwei Punkte, der Vorhandenseinswahrscheinlichkeiten des Punktes in den unterschiedlichen Untermengen, welche durch das Fahrzeug schneidende Geradensegmente verbunden sind; und
- eine Routine zur Berechnung einer Kollisionswahrscheinlichkeit des Objekts und des Fahrzeugs als Maximalwert der für jedes Paar von benachbarten Punkten berechneten Wahrscheinlichkeit.

**13.** System zum Auslösen von Sicherheitseinrichtungen eines Fahrzeugs, umfassend ein bordeigenes Berechnungssystem mit einem Speicher, welcher ein Programm nach einem der Ansprüche 9-12 enthält.

Fig. 1

Fig. 2

Fig. 3

Fig. 4

Fig. 5

Fig. 6

Fig. 7

| 72 | 74 | 76 |
|---|---|---|
| Réception des données de position des différents points, en fonction du temps | Calcul, pour chaque pas de temps, des droites' reliant deux ensembles de positions de deux points adjacents | Test si les droites intersectent le contour du véhicule et calcul de la probabilité pour chaque sous-ensemble. |

| Transmission de la probabilité de choc. | Calcul de la probabilité de choc avec l'objet détecté | Calcul des probabilités de choc pour chaque couple de points adjacents. |
|---|---|---|
| 82 | 80 | 78 |

Fig. 8